# EUROPEAN PATENT APPLICATION

(11) **EP 4 654 571 A1**
(43) Date of publication of application: **26.11.2025**
(21) Application number: 23916786.9
(22) Date of filing: 19.01.2023
(51) Int. Cl.: H04N 5/21, H04N 23/69, G09G 3/32, G06T 5/00

(54) **PHOTOGRAPHING DEVICE AND PHOTOGRAPHING CONTROL PROGRAM**

(71) Applicant: Beijing Xiaomi Mobile Software Co., Ltd., Beijing 100085 (CN)
(72) Inventor: OGURO, Yusuke, Tokyo 141--0031 (JP)
(74) Representative: Stöckeler, Ferdinand
(86) International application number: PCT/CN2023/073175
(87) International publication number: WO 2024/152306

(57) **Abstract**

Provided is a photographing device capable of automatically performing photographing processing that avoids generation of moiré patterns. The photographing device comprises: a camera unit provided with a photographing element; a determination part that determines whether a moiré fringe region is present in an image formed on the basis of an output of the photographing element; and a photographing processing part that switches, when the determination part determines that the moiré fringe region is present in the image, a photographing-related optical condition of the camera unit, and continues to perform photographing processing.

## Description

### FIELD

The present invention relates to a photographing device and a photographing control program.

### BACKGROUND

A photographing device that generates image data based on an image signal output from a photographing element has become widely popular. The photographing element generally has a large number of pixels arranged regularly in rows and columns. A photoelectric conversion is performed on a subject image imaged on a pixel plane through each pixel, to output image signal corresponding to the subject image. When at least part of the subject image imaged via an optical lens has a spatial frequency equal to or higher than half of a Nyquist frequency specified by a pixel pitch of the photographing element, a moiré pattern occurs in a corresponding region of an image generated from the output image signal. The moiré pattern appears in the generated image as a stripe pattern that does not actually exist and a false color that is different from an actual color. Therefore, a technology of notifying a user in advance, in a case that such moiré pattern is expected to appear in a photographic image, is being developed (for example, referring to patent document 1).

### A related art document

### A patent document

Patent document 1: Japanese Unexamined Patent Application Publication No. 2010-10881.

### SUMMARY

A problem to be solved by the present invention is as follow.

A camera unit is embedded in a smartphone, and the smartphone also functions as a photographing device. With a popularity of the smartphone, a user who is not familiar with a camera knowledge has an opportunity to enjoy taking photos. In this case, it is desirable to have a photographing device (and further a smartphone) that may automatically perform a photographing processing that avoids an occurrence of a moiré pattern without specifically requiring the user to have camera knowledge.

The present invention is made to solve such problem, which provides a photographing device and the like that may automatically perform the photographing processing which avoids generating the moiré pattern.

A solution for solving the problem is as follow.

A photographing device according to a first aspect of the present invention includes a camera unit having a photographing element, a determination unit configured to determine whether a moiré pattern region is present in an image formed based on an output of the photographing element, and a photographing processing unit configured to switch an optical condition related to photographing of the camera unit and continue to perform a photographing processing in a case that the determination unit determines that the moiré pattern region is present in the image.

A photographing control program according to a second aspect of the present invention causes a computer to perform the following steps, including: a determination step for determining whether a moiré pattern region is present in a image formed based on an output of the photographing element included in a camera unit; and a photographing processing step for switching an optical condition related to photographing of the camera unit and continuing to perform a photographing processing in a case of determining that the moiré pattern region is present in the image in the determination step.

A technical effect of the present invention is as follow.

Through the present invention, the photographing device capable of automatically performing the photographing processing that avoids generating the moiré pattern may be provided.

### BRIEF DESCRIPTION OF THE DRAWINGS

FIG. 1 is a view illustrating an appearance of a photographing device according to a first embodiment of the present implementation.
FIG. 2 is a diagram illustrating a main hardware configuration of a photographing device.
FIG. 3 is a diagram illustrating an example of a scenario where a moiré pattern image is generated.
FIG. 4 is a diagram for illustrating a pixel arrangement of a photographing element and a determination method for moiré pattern.
FIG. 5 is a diagram illustrating a first switching processing.
FIG. 6 is a diagram illustrating a second switching processing.
FIG. 7 is a flow chart illustrating a processing process of a moiré pattern avoidance processing.
FIG. 8 a diagram illustrating a main hardware configuration of a photographing device according to a second embodiment of the present implementation.
FIG. 9 is a flow chart illustrating a processing process of a moiré pattern avoidance processing.

### DETAILED DESCRIPTION

Hereinafter, the present invention is described through implementations of the invention. However, the present invention defined by the scope of the claims is not limited to the following implementations. Additionally, not all configurations described in the implementations are necessarily required as means for solving the technical problem.

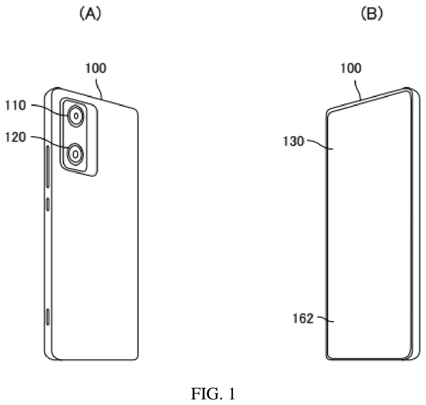

A photographing device according to a first embodiment and a photographing device according to a second embodiment of the present implementation will be described in sequence below. FIG. 1 a view illustrating an appearance of the photographing device 100 according to the first embodiment of the present implementation. Specifically, (A) in Fig. 1 is a view primarily illustrating a first side of the photographing device 100, and (B) in Fig. 1 is a view primarily illustrating a second side opposite to the first side. The photographing device 100 of the present implementation is a so-called smartphone, in other words, a smartphone that also functions as the photographing device. Hereinafter, a photographing function related to the present invention among functions of the smartphone will be described, while descriptions of other functions of the smartphone, such as the utilization of image data generated by photographing, will be omitted. Further, in the present implementation, the photographing device 100 is described by taking the smartphone as an example, but the photographing device 100 of course may be a photographing device serving as a single camera. In addition, the photographing device 100 may also be a device embedded in a tablet terminal or the like and having a photographing function.

The photographing device 100 has a first camera unit 110 and a second camera unit 120 arranged in the same direction on the first side of the photographing device 100. The first camera unit 110 is a camera unit configured to generate a wide-angle image. The second camera unit 120 is a camera unit configured to generate a telephoto image. In a case that the user desires to obtain a wide-angle image, the first camera unit is designated for photographing; and in a case that the user desires to obtain a telephoto image, the second camera unit is designated for photographing. As shown in the figure, the first camera unit 110 and the second camera unit 120 are arranged parallel to a long edge of the photographing device 100, but the arrangement of the two camera units is not limited to this, for example, the first camera unit 110 and the second camera unit 120 may also be arranged along a straight line obliquely intersecting with the long edge. Additionally, the first camera unit 110 and the second camera unit 120 may be arranged in positions reversed from those shown in the figure.

On the second side, the photographing device 100 is provided with a display 130. The display 130 is, for example, a display device that uses an organic electro luminescence (EL) panel, which displays (in a live view display) a real-time image of a subject before photographing, or displays a photographed image after photographing. In addition, a camera unit for selfies, which is independent of the first camera unit 110 and the second camera unit 120, may be provided on the second side.

A shutter button 161 is arranged on a side portion of the photographing device 100. The user may provide a photographing instruction to the photographing device 100 by pressing the shutter button 161. Additionally, a touch panel 162 is arranged on the display 130 in an overlapping manner. The user may also send a photographing instruction to the photographing device 100 by tapping a shutter button displayed on the display 130 instead of pressing the shutter button 161. Furthermore, by tapping any part of a subject image in the live view display, the user may also designate a certain area including this part as a focus area. Moreover, the user may switch between the first camera unit 110 and the second camera unit 120 or select displayed menu items through a touch action such as tapping.

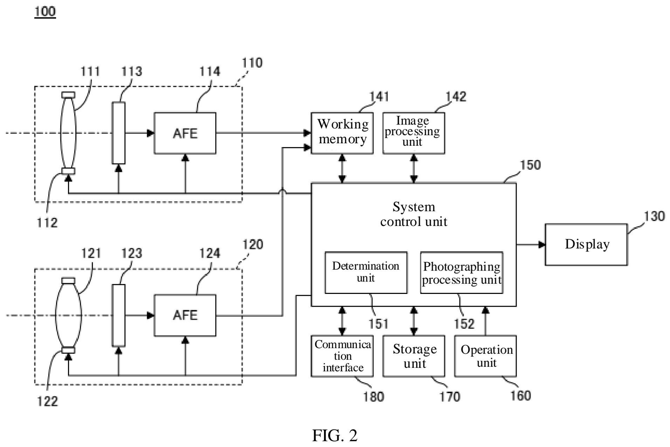

FIG. 2 is a diagram illustrating a main hardware configuration of the photographing device 100. In addition to the first camera unit 110, the second camera unit 120, and the display 130 described above, the photographing device 100 further includes a system control unit 150 that controls the first camera unit 110, the second camera unit 120, and the display 130 described above, and a peripheral unit that cooperates with the system control unit 150.

As described above, the first camera unit 110 is the camera unit configured to generate the wide-angle image and mainly includes a first optical system 111, a first drive mechanism 112, a first photographing element 113, and a first analog front end (AFE) 114. The first optical system 111 is an optical system configured to make an incident subject light beam imaged on a imaging surface of the first photographing element 113. Although the first optical system 111 is represented by a single lens in the figure, the first optical system 111 generally includes a plurality of lenses, and at least a portion of the plurality of lenses is a focusing lens that may move forward and backward along an optical axis direction. The first drive mechanism 112 is a drive mechanism configured to move the focusing lens of the first optical system 111 along the optical axis direction, and includes an actuator that operates according to an instruction from the system control unit 150.

The first photographing element 113 is, for example, a complementary metal-oxide-semiconductor (CMOS) image sensor. The first photographing element 113 has a color filter with a Bayer pattern, and each pixel constituting the first photographing element 113 is classified as one of an R (red) pixel, a G (green) pixel, or a B (blue) pixel. The first photographing element 113 transmits an image signal as an output signal to the first AFE 114 according to an instruction of the system control unit 150. Based on a gain instructed from the system control unit 150, the first AFE 114 adjusts a level of the image signal, and performs A/D conversion on the image signal to convert the image signal into digital data and transmits the data to a working memory 141.

As described above, the second camera unit 120 is the camera unit configured to generate the telephoto image and mainly has a second optical system 121, a second drive mechanism 122, a second photographing element 123, and a second analog front end (AFE) 124. The second optical system 121 is an optical system configured to make the incident subject light beam imaged on a imaging surface of the second photographing element 123. Although the second optical system 121 is represented by a single lens in the figure, the second optical system 121, similar to the first optical system 111, generally includes a plurality of lenses, and at least a portion of the plurality of lenses is a focusing lens that may move forward and backward along an optical axis direction. However, the second optical system 121 has a longer focal length than the first optical system 111 and has a lens configuration different from a lens configuration of the first optical system 111. The second drive mechanism 122 is a drive mechanism configured to move the focusing lens of the second optical system 121 along the optical axis direction and includes an actuator that operates according to an instruction of the system control unit 150. In addition, in the first embodiment, the first optical system 111 and the second optical system 121 are single-focus optical systems with fixed focal lengths.

The second photographing element 123 is a CMOS image sensor, for example. Similar to the first photographing element 113, the second photographing element 123 also has a color filter with the Bayer pattern, and each pixel constituting the first photographing element 113 is classified as one of the R (red) pixel, the G (green) pixel, or the B (blue) pixel. The second photographing element 123 transmits an image signal as an output signal to the second AFE 124 according to an instruction from the system control unit 150. The second AFE 124 adjusts a level of the image signal based on a gain instructed by the system control unit 150, and performs A/D conversion on the image signal to convert the image signal into digital data and transmits the data to the working memory 141. In addition, the first photographing element 113 and the second photographing element may utilize the same type of photographing element, or utilize separate photographing elements such as having different pixel pitches.

The system control unit 150 is a processor (for example, a ,central processing unit (CPU)) that directly or indirectly controls each unit constituting the photographing device 100. The system control unit 150 serves as a various-functional control unit according to executed control programs. For example, when performing a focusing control for the first camera unit 110 and the second camera unit 120, the system control unit 150 functions as a focusing control unit; when displaying the photographed image on the display 130, the system control unit 150 functions as a display control unit. In particular, the system control unit 150 may function as a determination unit 151 and a photographing processing unit 152 according to processing instructed by the photographing control program. The determination unit 151 mainly determines whether a moiré pattern region is present in a active image formed based on an output of the photographing element of an active unit (either the first photographing element 113 or the second photographing element 123) selected by the user among the first camera unit 110 and the second camera unit 120 and in a usage state. The photographing processing unit 152 mainly switches the active unit from a currently designated one of the first camera unit 110 and the second camera unit 120 to an un-designated other one of the first camera unit 110 and the second camera unit 120, and continues the photographing processing. These specific processing will be described later.

The photographing device 100 mainly has the working memory 141, an image processing unit 142, an operation unit 160, a storage unit 170, and a communication interface 180, which serve as the peripheral units that cooperate with the system control unit 150. The working memory 141 is a volatile high-speed memory, for example composed of including a static random access memory (SRAMS). The working memory 141 receives pixel data sequentially converted by the first AFE 114 and the second AFE 124 respectively, aggregates the pixel data into frame data of one frame quantity, and transmits the frame data to the image processing unit 142. In addition, the working memory 141 is appropriately used as a temporary storage area during a processing stage where the image processing unit 142 performs image processing and during a processing stage where the system control unit 150 performs focusing processing, etc.

The image processing unit 142 is, for example, composed of an application specific integrated circuit (ASIC) dedicated to the image processing., performs various image processing, such as an interpolation processing on the received frame data, and generates image data conforming to a predetermined format. If the generated image data is intended for storage, it will be stored in a storage unit 170. If the generated image data is intended for display, it will be displayed on the display 130. In addition, in a case that the determination unit 151 determines whether the moiré pattern region is present in the active image, the image processing unit 142 executes an extraction processing on the active image for extracting the moiré pattern region. The specific extraction processing will be described later.

The operation unit 160 is an input device that includes the shutter button 161 and the touch panel 162, and is a member that is operated when the user provides an instruction to the photographing device 100. When the photographing device 100 accepts a voice input, a microphone may also be included in the operation unit 160. The storage unit 170 is a non-volatile memory, and includes such as an solid state drive (SSD). In addition to storing the image data generated through photographing, the storage unit 170 also stores constants, variables, setting values, and control programs required for an action of the photographing device 100. The communication interface 180 may include a communication unit for a 5G line and a wireless LAN. The communication interface 180 is used when transmitting the generated image data to an external device.

In addition, similar to the first photographing element 113 and the second photographing element 123 in the present implementation, a normal photographing element used in the photographing device includes a large number of pixels arranged regularly in rows and columns. A photoelectric conversion of a subject image formed on a pixel plane is performed through each pixel, to output the image signal corresponding to the subject image. Here, when at least part of the subject image imaged via an optical lens has a spatial frequency equal to or higher than half of a Nyquist frequency specified by a pixel pitch of the photographing element, a moiré pattern is generated in a corresponding region of an image generated from the output image signal. The moiré pattern appears in the generated image as a stripe pattern that does not actually exist and a false color that is different from an actual color.

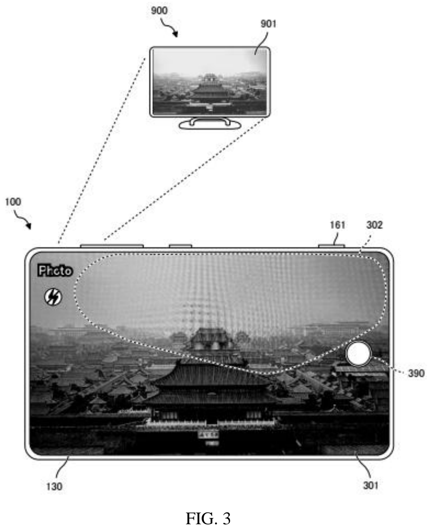

FIG. 3 is a diagram illustrating an example of a scenario where the moiré pattern image is generated when photographing with the photographing device. Specifically, a situation where the user uses the photographing device 100 to photograph a television image 901 displayed on a television monitor 900 is shown. On the display 130, an active image 301 containing a moiré pattern region 302 is displayed as a live view image. In addition, as described above, the active image 301 is an image formed by an output of the photographing element of the active unit that is selected by the user and in the usage state among the first camera unit 110 and the second camera unit 120. The active image 301 is displayed as the live view image on the display 130 at 60 fps (frames per second), for example. When the shutter button 161 serving as a physical switch is tapped or a shutter button 390 displayed overlapping with the active image 301 is pressed, the photographing processing unit 152 converts a live view image displayed at this time point or a image photographed at this time point into the image data for storage in the storage unit 170.

As shown in the figure, the active image 301 includes the moiré pattern region 302. The moiré pattern region 302 presents a distorted grid-like pseudo-pattern that does not exist in the television image 901. In the television monitor 900, a luminous pixel (e.g., in RGB) is regularly arranged, and the television image 901 formed by this luminous pixel may cause generation of the moiré pattern in the active image 301. In addition to a spatial frequency of a subject's optical image imaged on the photographing element, the generation of the moiré pattern is also influenced by factors such as a pattern and a brightness of the television image 901. Additionally, although the television image 901 is used as an example of the photographed subject in this implementation, the photographed subject is not limited thereto. For instance, the moiré pattern will be generated when photographing subjects with repeating patterns, such as clothing fibers or building walls.

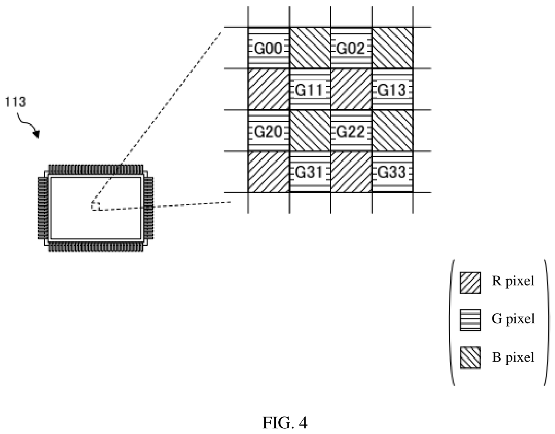

The determination unit 151 determines whether the moiré pattern region is present in the active image 301 formed according to the image signal output by the photographing element of the active unit. FIG. 4 is a diagram for illustrating a pixel arrangement of the first photographing element 113 and a determination method for the moiré pattern. In addition, since a pixel arrangement of the second photographing element 123 is the same as that of the first photographing element 113, a determination method for the moiré pattern of the image formed based on the output of the second photographing element 123 is also the same as the above-mentioned determination method.

As described above, the first photographing element 113 is composed of the R pixel, the G pixel, and the B pixel corresponding to the Bayer pattern. In this implementation, focusing on the G pixel that occupy two out of four pixels including two horizontal pixels and two vertical pixels forming a repeating unit in the Bayer pattern, each G pixel is labeled with reference signs G00 to G33, as shown in the figure. At this time, if each pixel value is represented as V (Gmn), an evaluation value E of a unit region of the G pixels containing eight pixels (i.e., four horizontal pixels and four vertical pixels) is defined as following equation. E = {|(V (G02) + V (G22)) - (V (G11) + V (G13))| + |(V (G11) + V(G31)) - (V (G20) + V (G22))|}/4

When the evaluation value E is greater than the value of a preset threshold, the unit region is determined as a moiré pattern unit region. The moiré pattern region 302 shown in FIG. 3 is a collective region of such determined moiré pattern unit regions.

In a case that determining that there is a collective region of the moiré pattern unit regions exceeding a preset size in the active image 301, the determination unit 151 determines that a moiré pattern region is present on the active image 301. In addition, the determination method for the moiré pattern region is not limited to this, which may also adopt other well-known methods.

Next, a processing of the photographing processing unit 152 in a case that the determination unit 151 determines that a moiré pattern region is present in the active image 301 will be explained. First, a processing of the photographing processing unit 152 when the active unit is the second camera unit 120 and when the active image 301 is a telephoto image 320 formed based on the output of the second photographing element 123 will be explained.

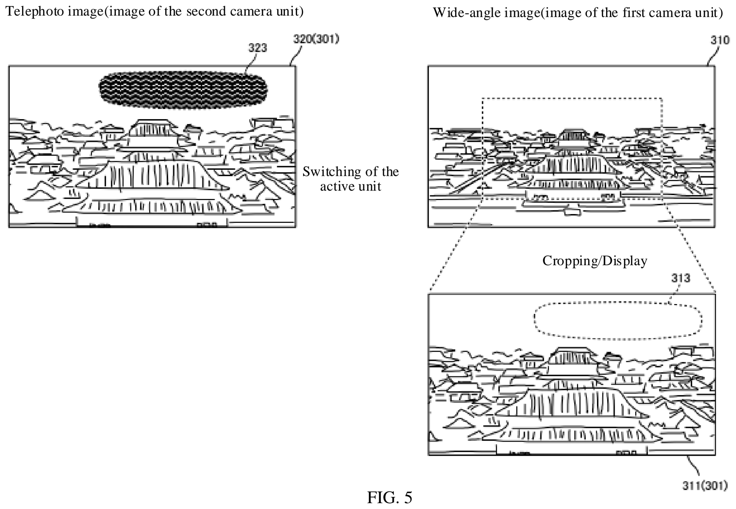

FIG. 5 is a diagram illustrating a first switching processing for switching the active unit from the second camera unit 120 to the first camera unit 110. In a case that the active unit is the second camera unit 120, the active image 301 is the telephoto image 320. When the telephoto image 320 containing a moiré pattern region 323 is determined through the determination unit 151, the photographing processing unit 152 switches the active unit from the second camera unit 120 to the first camera unit 110. It should be noted that the "switching" mentioned here may refer to either an automatic switching or a switching triggered by the user. Thus, the working memory 141 receives frame data converted by the first AFE 114 from the image signal output by the first photographing element 113, and the image processing unit 142 receives this frame data to generate a wide-angle image 310. Further, the image processing unit 142 generates a cropped image 311 by cropping an image region corresponding to a viewing angle of the second optical system 121, i.e., an image region corresponding to the entire region of the telephoto image 320, from the generated wide-angle image 310. It should be noted that the cropped image here may also be an image formed by fusing an image region corresponding to a viewing angle of the wide-angle image in the telephoto image generated by a telephoto camera and an image region other than the aforementioned image region generated by a wide-angle camera.

The cropped image 311 is displayed as the active image 301 on the display 130. That is, in a case that the telephoto image 320 contains the moiré pattern region 323, the active unit is automatically switched, and the cropped image 311 cropped from the wide-angle image 310 is displayed as the active image 301 on the display 130. When switching from the second camera unit 120 to the first camera unit 110, an optical system configured to form the subject image is switched to the first optical system 111, which is different from the second optical system 121, ,that is, an optical condition related to photographing is switched. Therefore, even if the moiré pattern is generated under a relationship between a spatial frequency of a subject image imaged on the imaging surface of the second photographing element 123 and a pixel pitch of the second photographing element 123, it may be expected that no moiré pattern is generated under a relationship between a spatial frequency of a subject image imaged on the imaging surface of the first photographing element 113 and a pixel pitch of the first photographing element 113. In other words, as long as not matching a condition for generating the moiré pattern under the relationship between the spatial frequency of the subject image imaged on the imaging surface of the first photographing element 113 and the pixel pitch of the first photographing element 113, there will be no moiré pattern region in the cropped image 311. That is, in the illustrated cropped image 311, no moiré pattern will appear in a moiré pattern corresponding region 313 corresponding to the moiré pattern region 323 of the telephoto image 320.

In this way, when the shutter button 161 is pressed or the shutter button 390 is tapped while the cropped image 311 is displayed on the display 130, the photographing processing unit 152 converts the cropped image 311 displayed at this time point or the cropped image 311 cropped from the wide-angle image 310 photographed at this time point into the image data and stores the image data in the storage unit 170. When the first switching processing is performed automatically, the user may obtain image data of an desired image that does not contain a moiré pattern region without special consciousness. In addition, in the present implementation, it may also be configured to perform the image processing on the cropped image 311 after the wide-angle image 310 is formed, while the first AFE 114 selectively performs the A/D conversion on the image signal for forming the cropped image 311 in the image signals output by the first photographing element 113 and transmits them to the working memory 141.

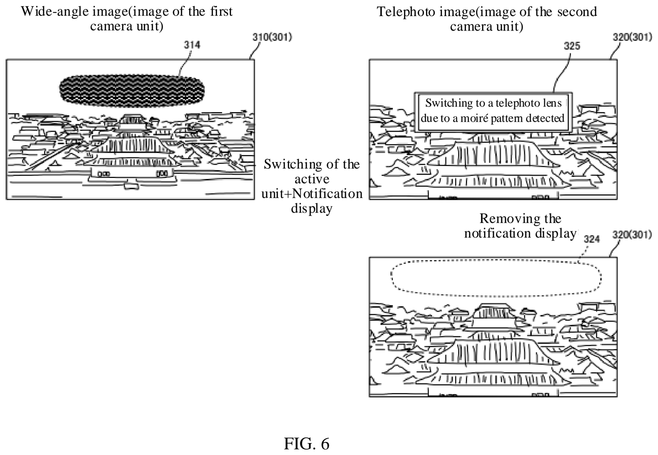

Next, a processing of the photographing processing unit 152, in a case that the active unit is the first camera unit 110 and it is determined that a moiré pattern region is present in the wide-angle image 310 as the active image 301, will be described. FIG. 6 is a diagram illustrating a second switching processing for switching the active unit from the first camera unit 110 to the second camera unit 120.

When the active unit is the first camera unit 110, the active image 301 is the wide-angle image 310. When the wide-angle image 310 containing a moiré pattern region 314 is determined through the determination unit 151 , the photographing processing unit 152 switches the active unit from the first camera unit 110 to the second camera unit 120. Thus, the working memory 141 receives frame data converted by the second AFE 114 from the image signal output by the second photographing element 123, and the image processing unit 142 receives the frame data to generate the telephoto image 320.

The telephoto image 320 is displayed as the active image 301 on the display 130. At this time, since it is not possible to crop an image region corresponding to a viewing angle of the first optical system 111, i.e., a region corresponding to the entire region of the wide-angle image 310, from the telephoto image 320, the entire region of generated telephoto image 320 is displayed directly. Then, the active image 301 displayed as a live-view image is switched to an image with a different viewing angle at a certain time point, which may cause discomfort to the user. Therefore, the photographing processing unit 152 performs a notification related to a viewing angle adjustment to the user. Specifically, a notification display 325 is displayed in an overlapping manner with the telephoto image 320. The notification display 325 contains a notification content such as "switching to a telephoto lens due to a moiré pattern detected".

After a certain period from a start of the notification, the photographing processing unit 152 removes the notification display 325. In this way, when switching from the first camera unit 110 to the second camera unit 120, the optical system configured to form the subject image is switched to the second optical system 121 different from the first optical system 111. That is, the optical condition related to photographing is switched. Therefore, even if a moiré pattern is generated under the relationship between the spatial frequency of the subject image imaged on the imaging surface of the first photographing element 113 and the pixel pitch of the first photographing element 113, it may be expected that no moiré pattern is generated under the relationship between the spatial frequency of the subject image imaged on the imaging surface of the second photographing element 123 and the pixel pitch of the second photographing element 123. In other words, as long as not matching a condition for generating the moiré pattern under the relationship between the spatial frequency of the subject image imaged on the imaging surface of the second photographing element 123 and the pixel pitch of the second photographing element 123, there will be no moiré pattern region in the telephoto image 320. That is, in the illustrated telephoto image 320, no moiré pattern will appear in a moiré pattern corresponding region 324 corresponding to the moiré pattern region 314 of the wide-angle image 310.

In this way, when the shutter button 161 is pressed or the shutter button 390 is tapped while the telephoto image 320 is displayed on the display 130, the photographing processing unit 152 converts the telephoto image 320 displayed at this time point or the telephoto image 320 cropped from the wide-angle image 310 re-photographed at this time point into image data and stores the image data in the storage unit 170. When this second switching processing is performed automatically, the user may obtain image data of a desired image that does not contain a moiré pattern region based on being aware of switching to the telephoto image 320.

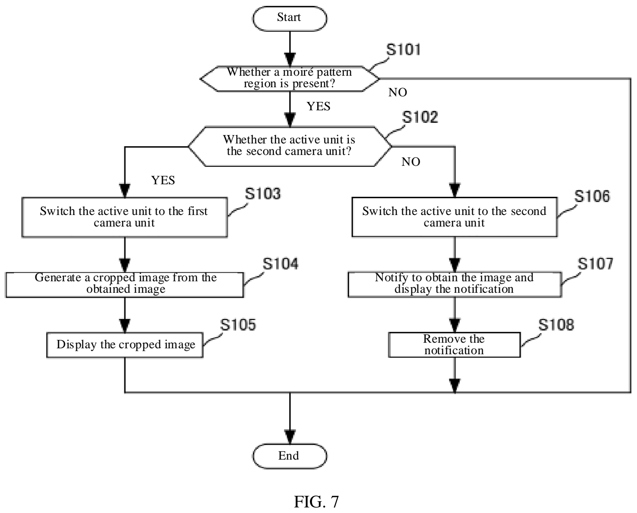

Next, a processing sequence of a moiré pattern avoidance processing performed periodically during a display of the live-view image will be explained. FIG. 7 is a flow chart illustrating a processing procedure of the moiré pattern avoidance processing. The process starts at a time point matching a set period during the display of the live-view image.

In step S101, the determination unit 151 determines whether a moiré pattern region is present in the active image 301. If it is determined that no moiré pattern is present, the moiré avoidance processing for this period terminates. If it is determined that the moiré pattern region is present, proceed to step S102.

In the step S102, the photographing processing unit 152 determines whether the current active unit is the second camera unit 120 or the first camera unit 110. If it is confirmed that the current active unit is the second camera unit 120, proceed to step S103; if it is confirmed that the current active unit is the first camera unit 110, proceed to step S106.

After entering the step S103, the photographing processing unit 152 switches the active unit to the first camera unit 110. When the active unit is switched to the first camera unit 110, proceed to step S104, where the working memory 141 receives the obtained frame data converted by the first AFE 114, and the image processing unit 142 receives the frame data to generate a wide-angle image 310. Further, the image processing unit 142 crops the image region corresponding to the entire region of the telephoto image 320 from the generated wide-angle image 310, to generate the cropped image 311.

In step S105, the photographing processing unit 152 displays the cropped image 311 generated by the image processing unit 142 on the display 130 and complete a series of moiré pattern avoidance processing. Additionally, after starting a live-view display of the cropped image 311, the shutter button 161 is pressed or the shutter button 390 is tapped to complete a photographing and storage instruction, and a storage processing ends, then the live-view display of the cropped image 311 ends, and the active unit is returned to the original second camera unit 120.

After entering step S106 from the step S102, the photographing processing unit 152 switches the active unit to the second camera unit 120. When the active unit is switched to the second camera unit 120, proceed to step S107, where the working memory 141 receives the obtained frame data converted by the second AFE 124, and the image processing unit 142 receives the frame data and generates the telephoto image 320. The photographing processing unit 152 overlays the notification display 325 on the telephoto image 320 generated by the image processing unit 142 and displays the notification display 325 on the display 130. Then, after a specified period of time, in step S108, the notification display 325 is removed, and the series of moiré pattern avoidance processing ends. Additionally, after starting a live-view display of the telephoto image 320, the shutter button 161 is pressed or the shutter button 390 is tapped to complete a photographing and storage instruction, and a storage processing ends, then the live-view display of the telephoto image 320 ends, and the active unit is returned to the original first camera unit 110.

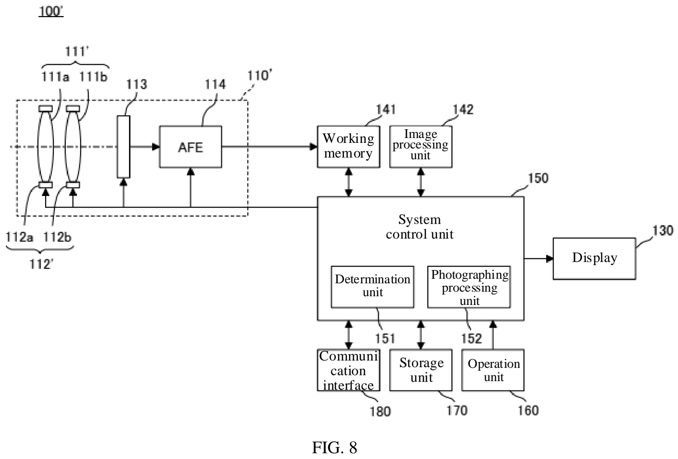

Next, the photographing device according to the second embodiment of the present implementation will be described. FIG. 8 is a diagram illustrating a main hardware configuration of the photographing device 100' according to the second embodiment of the present implementation. Similar to the photographing device 100 of the first embodiment, the photographing device 100' of the second embodiment is also a so-called smartphone. However, unlike the photographing device 100, the photographing device 100' has a separate camera unit 110', and the separate camera unit 110' has an optical system 111' as a so-called zoom lens that may change its focal length. In the following description, unless otherwise specified, the same reference numerals are assigned to the same units as those in the photographing device 100 of the first embodiment, and explanations thereof are omitted.

The camera unit 110' mainly includes an optical system 111', a drive mechanism 112', the first photographing element 113, and the first AFE 114. In addition, as described above, in the present embodiment, the photographing device 100' has the separate camera unit 110'. However, since the functions of the photographing element and the analog front end included in the camera unit 110' are substantially the same as those of the first camera unit 110 of the first embodiment, the photographing element and the analog front end included in the camera unit 110' are directly referred to as the first photographing element 113 and the first AFE 114 respectively for convenience.

The optical system 111' is an optical system configured to make incident subject light beams imaged on the imaging surface of the first photographing element 113. The optical system 111' includes a focusing lens group 111a and a magnification-changing lens group 111b. In the figure, for convenience, the focusing lens group 111a and the magnification-changing lens group 111b are each shown as a single lens and arranged in a front-back configuration. However, each lens group generally consists of a plurality of lenses. Moreover, the two lens groups are not necessarily arranged in a front-back configuration.

The drive mechanism 112' includes a focusing lens drive mechanism 112a and a magnification-changing lens drive mechanism 112b. The focusing lens drive mechanism 112a is a drive mechanism configured to move at least part of lenses in the focusing lens group 111a along an optical axis direction, and includes an actuator that operates according to an instruction from the system control unit 150. The system control unit 150 adjusts a focus of a subject image reaching the first photographing element 113 by providing the instruction to the focusing lens drive mechanism 112a. The magnification-changing lens drive mechanism 112b is a drive mechanism configured to move at least part of lenses in the magnification-changing lens group 111b along an optical axis direction, and includes an actuator that operates according to an instruction from the system control unit 150. The system control unit 150 adjusts a viewing angle of the subject image reaching the first photographing element 113 by providing the instruction to the magnification-changing lens drive mechanism 112b.

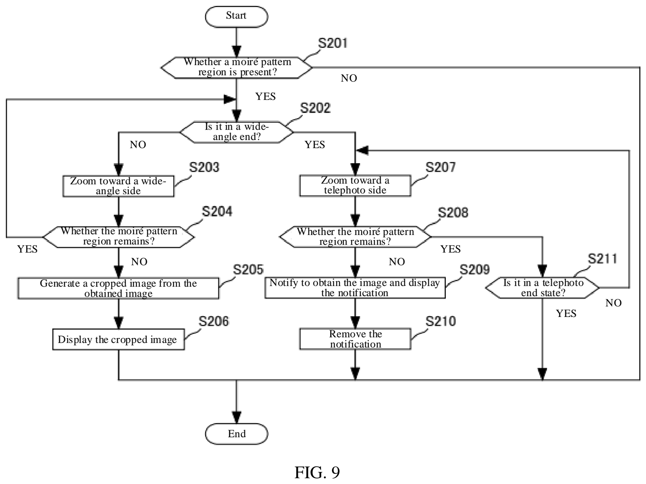

Next, a characteristic photographing control of the photographing device 100' controlled by the processing process of the moiré pattern avoidance processing periodically performed during the display of the live-view image will be explained. FIG. 9 is a flowchart illustrating a processing procedure of the moiré pattern avoidance processing. This process starts at a time point matching a set period during the display of the live-view image.

In step S201, the determination unit 151 determines whether a moiré pattern region is present in the active image 301. In addition, in the second embodiment, the active image 301 is always an image formed based on an output of the first photographing element 113, and in this sense, the camera unit 110' is always the active unit. If it is determined that no moiré pattern region is present, the moiré avoidance processing for this period terminates. If it is determined that the moiré pattern region is present, proceed to step S202.

If proceeding to the step S202, the photographing processing unit 152 confirms whether the current magnification-changing lens group 111b is in a wide-angle end state. If it is confirmed not to be in the wide-angle end state, proceed to step S203; if it is confirmed to be in the wide-angle end state, proceed to step S207.

If entering the step S203, the photographing processing unit 152 drives the magnification-changing lens drive mechanism 112b so that the magnification-changing lens group 111b zooms toward a wide-angle side by a preset viewing angle change amount. If the zooming processing ends, in step S204, the determination unit 151 determines whether a moiré pattern region remains in the active image 301 generated after the zooming processing. If it is determined that a moiré pattern region remains, return to the step S202 to further repeat the zooming processing toward the wide-angle side. If it is determined that no moiré pattern region remains, proceed to step S205.

If entering the step S205, the image processing unit 142 crops an image region corresponding to a viewing angle of the active image 301 at a start of the moiré pattern avoidance processing from the generated active image 301 to generate the cropped image 311. Then, entering step S206, where the photographing processing unit 152 displays the cropped image 311 generated by the image processing unit 142 on the display 130, thus completing a series of moiré pattern avoidance processing. Additionally, after a live-view display of the cropped image 311, the shutter button 161 is pressed or the shutter button 390 is tapped to complete a photographing and storage instruction, and a storage processing ends, then the live-view display of the cropped image 311 ends, and the magnification-changing lens group 111b is returned to its magnification-changing state at a start of the moiré pattern avoidance processing.

When entering step S207 from the step S202, the photographing processing unit 152 drives the magnification-changing lens drive mechanism 112b so that the magnification-changing lens group 111b zooms toward a telephoto side by a preset viewing angle change amount. If the zooming processing ends, then in step S208, the determination unit 151 determines whether a moiré pattern region remains in the active image 301 generated after the zooming processing. If it is determined that the moiré pattern region remains, proceed to step S211 where it is confirmed whether the zoomed magnification-changing lens group 111b is in a telephoto end state. If it is confirmed not to be in the telephoto end state, return to the step S207 and further repeat the zooming processing toward the telephoto side. When it is confirmed to be in the telephoto end state, the magnification-changing lens group 111b is returned to its zooming state at a start of the moiré pattern avoidance processing, the moiré pattern avoidance is abandoned, and the moiré pattern avoidance processing for this cycle ends.

In the step S208, if it is determined that no moiré pattern region remains, proceed to step S209. In the step S209, the image processing unit 142 generates the active image 301, and the photographing processing unit 152 overlays the notification display 325 on the active image 301 generated by the image processing unit 142 and displays the notification display 325 on the display 130. As described above, the notification display 325 includes a notification content notifying a viewing angle change. Then, after a specified period of time, in the step S210, the notification display 325 is removed, and the series of moiré pattern avoidance processing ends. Additionally, after starting the live-view display of the active image 301 by changing the magnification toward the telephoto side, the shutter button 161 is pressed or the shutter button 390 is tapped to complete the photographing and storage instruction, and the storage processing ends, then a live-view display of a telephoto viewing angle ends, and the magnification-changing lens group 111b is returned to its magnification-changing state at a start of the moiré pattern avoidance processing.

In this way, by automatically zooming the magnification-changing lens group 111b, it is also possible to switch the optical condition related to photographing. That is, even if the moiré pattern is generated under the relationship between the spatial frequency of the subject image imaged on the imaging surface of the first photographing element 113 and the pixel pitch of the first photographing element 113 at a certain field of view (or a certain focal length), it may be expected that no moiré pattern will be generated under the relationship between the spatial frequency of the subject image imaged on the imaging surface of the first photographing element 113 and the pixel pitch of the first photographing element 113 at another field of view (or another focal length). Thus, if the zooming processing of a zoom lens group is performed automatically, the user, in many cases, may obtain the image data of the image that does not contain the moiré pattern region.

As described above, although the present implementation is illustrated by means of two embodiments, the first embodiment and second embodiment may also be combined. Additionally, although the photographing device 100 having two camera units is described in the first embodiment, the photographing device may also be configured with three or more camera units. In this case, when the determination unit 151 determines that the moiré pattern region is present, the photographing processing unit 152 preferably switches the active unit to a camera unit with an optical system of a wider-angle side.

In addition, although the present invention provides the photographing device capable of automatically performing the photographing processing to avoid the generation of the moiré pattern, it does not exclude a case where the user actively performs an adjustment when being aware of moiré pattern presence. That is, when the determination unit detects the presence of the moiré pattern, the photographing processing unit may prompt the user and instruct the user to move the photographing device toward or away from the photographed subject to avoid the generation of the moiré pattern.

References signs:
100100'- photographing device; 110- first camera unit; 110'- camera unit; 111- first optical system; 111'- optical system; 111a- focusing lens group; 111b- magnification-changing lens group; 112-first drive mechanism; 112'- drive mechanism; 112a- focusing lens drive mechanism; 112b-magnification-changing lens drive mechanism; 113- first photographing element; 114- first analog front end (AFE); 120- second camera unit; 121- second optical system; 122- second drive mechanism; 123- second photographing element; 124- second analog front end (AFE); 130-display; 150- system control unit; 151- determination unit; 152- photographing processing unit; 141- working memory; 142- image processing unit; 160- operation unit; 161- shutter button; 162-touch panel; 170- storage unit; 180- communication interface; 301- active image; 302- moiré pattern region; 390- shutter button; 310- wide-angle image; 311- cropped image; 313- moiré pattern corresponding region; 314- moiré pattern region; 320- telephoto image; 323- moiré pattern region; 324- moiré pattern corresponding region; 325- notification display; 900- television monitor; 901- television image.

## Claims

1. A photographing device, comprising:
a camera unit having a photographing element;
a determination unit configured to determine whether a moiré pattern region is present in an image formed based on an output of the photographing element; and
a photographing processing unit configured to switch an optical condition related to photographing of the camera unit and continue to perform a photographing processing in a case that the determination unit determines that the moiré pattern region is present in the image.

2. The photographing device according to claim 1, wherein
the camera unit at least comprises a first camera unit and a second camera unit, the first camera unit has a first photographing element serving as the photographing element and a first optical system configured to make a subject image imaged on the first photographing element, and the second camera unit has a second photographing element serving as the photographing element and a second optical system different from the first optical system and configured to make the subject image imaged on the second photographing element,
the determination unit is configured to determine whether the moiré pattern region is present in an active image formed based on an output of a photographing element of a selected active unit of the first camera unit and the second camera unit, and
the photographing processing unit is configured to switch the active unit from one of the first camera unit and the second camera unit to another of the first camera unit and the second camera unit and continue to perform the photographing processing in a case that the determination unit determines that the moiré pattern region is present in the active image.

3. The photographing device according to claim 2, wherein,
in a case that a focal length of the first optical system is shorter than a focal length of the second optical system, and in a case that the active unit is switched from the second camera unit to the first camera unit, the photographing processing unit is configured to generate a cropped image of an image region corresponding to a viewing angle of the second optical system, and the cropped image is cropped from a first image capable of being formed based on an output of the first photographing element.

4. The photographing device according to claim 2, wherein,
in a case that a focal length of the first optical system is shorter than a focal length of the second optical system, and in a case that the active unit is switched from the first camera unit to the second camera unit, the photographing processing unit is configured to perform a notification related to a viewing angle adjustment to a user.

5. The photographing device according to claim 1, wherein
the camera unit has a zoom optical system capable of changing a focal length and making a subject image imaged on the photographing element, and
in a case that the determination unit determines that the moiré pattern region is present in the image, the photographing processing unit is configured to change the focal length of the zoom optical system and continues to perform the photographing processing.

6. The photographing device according to claim 5, wherein,
in a case that the zoom optical system is changed to have a focal length closer to a short focal length side than an original focal length, the photographing processing unit is configured to generate a cropped image of an image region corresponding to a viewing angle of the original focal length, and the cropped image is cropped from the image formed based on the output of the photographing element.

7. The photographing device according to claim 5, wherein,
in a case that the zoom optical system is changed to have a focal length closer to a long focal length side than an original focal length, the photographing processing unit is configured to perform a notification related to a viewing angle adjustment to a user.

8. A photographing control program, causing a computer to perform following steps comprising:
a determination step for determining whether a moiré pattern region is present in an image formed based on an output of a photographing element comprised in a camera unit; and
a photographing processing step for switching an optical condition related to photographing of the camera unit and continuing to perform a photographing processing in a case of determining that the moiré pattern region is present in the image in the determination step.
